# EUROPEAN PATENT SPECIFICATION

(11) **EP 3 118 912 B1**
(45) Date of publication and mention of the grant of the patent: **14.03.2018**
(21) Application number: 16186155.4
(22) Date of filing: 14.06.2012
(51) Int. Cl.: H01M 2/10, H01M 10/36, H01M 4/04, H01M 10/04, H01M 4/1395, H01M 4/38, H01M 6/00, H01M 6/40, H01M 4/139, H01M 10/052, H01M 10/0585, H01M 2/02, H01M 2/26, H01M 10/0562, H01M 4/525, H01M 6/18, C01B 21/097

(54) **THIN FILM BATTERIES COMPRISING A STEP IN THE ELECTROLYTE LAYER**
DÜNNSCHICHTBATTERIEN MIT EINER STUFE IM ELEKTROLYTEN
BATTERIES À FILM MINCE AVEC UN SEUIL DANS L'ÉLECTROLYTE

(30) Priority: 17.06.2011 US 201161498484 P
(43) Date of publication of application: 18.01.2017
(62) Divisional of application: 12864769.0
(73) Proprietor: Applied Materials, Inc., Santa Clara, CA 95054 (US)
(72) Inventor: Song, Daoying, San Jose, CA 95124 (US); Jiang, Chong, Cupertino, CA 95014 (US); Kwak, Byung-Sung Leo, Portland, OR 97229 (US)
(74) Representative: Zimmermann & Partner Patentanwälte mbB

(56) References cited:
- WO-A1-2009/055529
- WO-A2-2011/037868
- US-A1- 2006 286 448

## Description

### FIELD OF THE INVENTION

Embodiments of the present invention relate generally to shadow mask-less fabrication processes for thin film batteries.

### BACKGROUND OF THE INVENTION

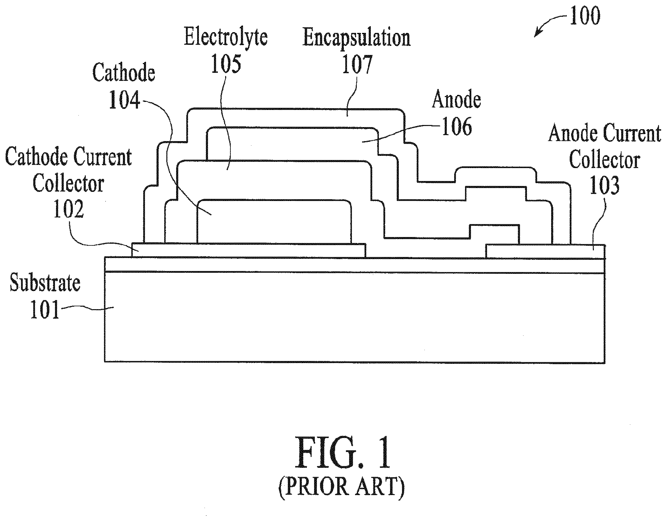

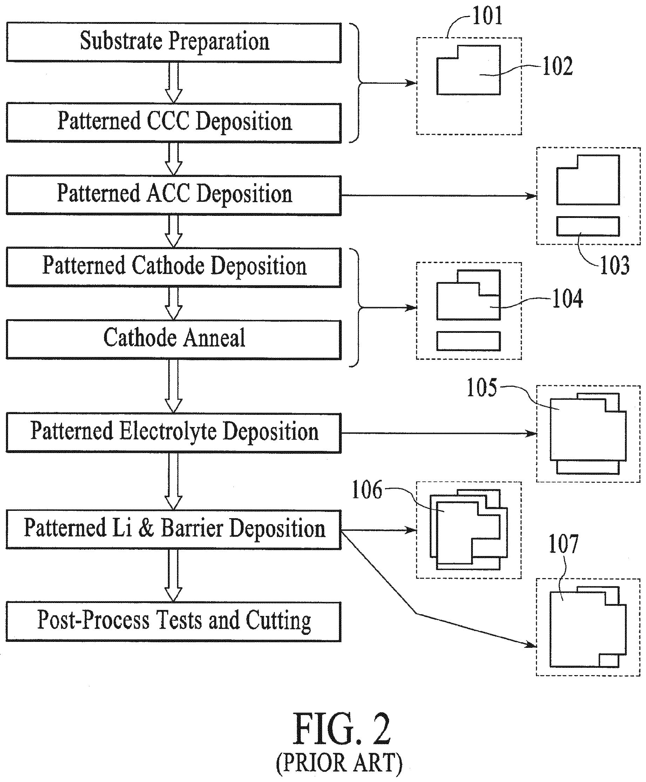

Thin film batteries (TFBs) have been projected to dominate the micro-energy applications space. TFBs are known to exhibit several advantages over conventional battery technology such as superior form factors, cycle life, power capability and safety. FIG. 1 shows a cross-sectional representation of a typical thin film battery (TFB) and FIG. 2 shows a flow diagram for TFB fabrication along with corresponding plan views of the patterned TFB layers. FIG. 1 shows a typical TFB device structure 100 with anode current collector 103 and cathode current collector 102 are formed on a substrate 101, followed by cathode 104, electrolyte 105 and anode 106; although the device may be fabricated with the cathode, electrolyte and anode in reverse order. Furthermore, the cathode current collector (CCC) and anode current collector (ACC) may be deposited separately. For example, the CCC may be deposited before the cathode and the ACC may be deposited after the electrolyte. The device may be covered by an encapsulation layer 107 to protect the environmentally sensitive layers from oxidizing agents. See, for example, N. J. Dudney, Materials Science and Engineering B 1 16, (2005) 245-249. Note that the component layers are not drawn to scale in the TFB device shown in FIG. 1.

However, there are challenges that still need to be overcome to allow cost effect high volume manufacturing (HVM) of TFBs. Most critically, an alternative is needed to the current state-of-the-art TFB device patterning technology used during physical vapor deposition (PVD) of the device layers, namely shadow masks. There is significant complexity and cost associated with using shadow mask processes in HVM: (1) a significant capital investment is required in equipment for managing, precision aligning and cleaning the masks, especially for large area substrates; (2) there is poor utilization of substrate area due to having to accommodate deposition under shadow mask edges; and (3) there are constraints on the PVD processes - low power and temperature - in order to avoid thermal expansion induced alignment issues.

In HVM processes, the use of shadow masks (ubiquitous for traditional and current state-of-the-art TFB fabrication technologies) will contribute to higher complexity and higher cost in manufacturing. The complexity and cost result from the required fabrication of highly accurate masks and (automated) management systems for mask alignment and regeneration. Such cost and complexity can be inferred from well known photolithography processes used in the silicon-based integrated circuit industry. In addition, the cost results from the need for maintaining the masks as well as from throughput limitations by the added alignment steps. The adaptation becomes increasingly more difficult and costly as the manufacturing is scaled to larger area substrates for improved throughput and economies of scale (i.e., HVM). Moreover, the scaling (to larger substrates) itself can be limited because of the limited availability and capability of shadow masks.

Another impact of the use of shadow masking is the reduced utilization of a given substrate area, leading to non-optimal battery densities (charge, energy and power). This is because shadow masks cannot completely limit the sputtered species from depositing underneath the masks, which in turn leads to some minimum non-overlap requirement between consecutive layers in order to maintain electrical isolation between key layers. The consequence of this minimum non-overlap requirement is the loss of cathode area, leading to overall loss of capacity, energy and power content of the TFB (when everything else is the same).

A further impact of shadow masks is limited process throughput due to having to avoid thermally induced alignment problems - thermal expansion of the masks leads to mask warping and shifting of mask edges away from their aligned positions relative to the substrate. Thus the PVD throughput is lower than desired due to operating the deposition tools at low deposition rates to avoid heating the masks beyond the process tolerances.

Furthermore, processes that employ physical (shadow) masks typically suffer from particulate contamination, which ultimately impacts the yield.

WO 2011/037868 A2 describes a factory layout for lithium-based thin-film battery manufacturing, the factory layout having a process tool configured for laser scribing of wafers or substrates upon which thin-film batteries are fabricated.

WO 2009/055529 A1 describes a method for high volume manufacturing of thin film batteries including providing a substrate, depositing layers corresponding to a thin film battery structure on the substrate, the layers including, in order of deposition, a cathode, an electrolyte and an anode, wherein at least one of the deposited layers is unpatterned by a physical mask during deposition, depositing a protective coating, and scribing the layers and the protective coating.

Therefore, there remains a need for concepts and methods that can significantly reduce the cost of HVM of TFBs by enabling simplified, more HVM-compatible TFB process technologies.

### SUMMARY OF THE INVENTION

The objects of the present invention are solved by the features of the independent claims.

The concepts and methods of the present invention are intended to permit reduction of the cost and complexity of thin film battery (TFB) high volume manufacturing (HVM) by eliminating and/or minimizing the use of shadow masks. Furthermore, embodiments of the present invention may improve the manufacturability of TFBs on large area substrates at high volume and throughput. This may significantly reduce the cost for broad market applicability as well as provide yield improvements. According to aspects of the invention, these and other advantages are achieved with the use of a selective laser ablation process - where the laser patterning process removes a layer or stack of layers while leaving layer(s) below intact - to meet certain or all of the patterning requirements. Full device integrations of the present invention include not only active layer depositions/patterns, but also protective and bonding pad layer depositions/patterning.

According to some embodiments of the present invention, a method of fabricating a thin film battery includes blanket deposition on a substrate and selective laser patterning of all or certain device layers. For example, the present invention may include: blanket deposition of a current collector (e.g. Ti/Au) on the substrate and selective laser patterning (selective between the current collector and the substrate); blanket deposition of a cathode (e.g. LiCoO2) on the patterned current collector and selective laser patterning (selective between the cathode and the current collector (e.g. Ti/Au)); and blanket deposition of an electrolyte (e.g. LiPON) on the patterned cathode and selective laser patterning (selective between the electrolyte and the patterned current collector (e.g. Ti/Au)). To reduce laser damage to the remaining areas of the current collectors some or all of the following may be utilized: the thin cathode layer may be intentionally left in the bonding pad regions of the current collectors during the first ablation of the cathode layer; and current collector regions are opened step by step - in other words, each opened area of current collector is only directly exposed to the laser once.

According to some further embodiments of the present invention, a method of fabricating a thin film battery, may comprise: depositing a first stack of blanket layers on a substrate, the stack comprising a cathode current collector layer, a cathode layer, an electrolyte layer, an anode layer and an anode current collector layer; laser die patterning the first stack to form a second stack; laser patterning the second stack to form a device stack, the laser patterning revealing a cathode current collector area and a portion of the electrolyte layer adjacent to the cathode current collector area, wherein the laser patterning of the second stack includes removing a part of the thickness of the portion of the electrolyte layer to form a step in the electrolyte layer; and depositing on the device stack and patterning encapsulation and bonding pad layers.

Furthermore, when die patterning is from the substrate side - the laser beam passes through the substrate before reaching the deposited layers - a die patterning assistance layer, e.g. an amorphous silicon (a-Si) layer or a microcrystalline silicon (µc-Si) layer, may be used to achieve thermal stress mismatch induced laser ablation, which greatly reduces the laser energy required to remove material and improves die patterning quality.

Furthermore, this invention describes tools for carrying out the above method.

### BRIEF DESCRIPTION OF THE DRAWINGS

These and other aspects and features of the present invention will become apparent to those ordinarily skilled in the art upon review of the following description of specific embodiments of the invention in conjunction with the accompanying figures, wherein:
FIG. 1 is a cross-sectional representation of a thin film battery (TFB);
FIG. 2 is a flow diagram for TFB fabrication along with corresponding plan views of the patterned TFB layers;
FIGS. 3A-3P are cross-sectional representations of sequential steps in a first process flow for fabrication of a TFB, according to some embodiments useful for the understanding of the present invention;
FIGS. 4A-4K are cross-sectional representations of sequential steps in a second process flow for fabrication of a TFB, according to some embodiments useful for the understanding of the present invention;
FIGS. 5A-5D are cross-sectional and plan view representations of sequential steps in a third process flow for fabrication of a TFB, according to some embodiments of the present invention;
FIGS. 6A-6C are cross-sectional representations of sequential steps in a fourth process flow for fabrication of a TFB, according to some embodiments of the present invention;
FIG. 7 is a profilometer trace across the edge of a layer patterned from the backside of the substrate by a 532 nm nanosecond laser, according to some embodiments of the present invention;
FIG. 8 is a profilometer trace across the edge of a layer patterned from the frontside of the substrate by a 532 nm nanosecond laser, according to some embodiments of the present invention;
FIG. 9 is a profilometer trace across the edge of a layer patterned from the frontside of the substrate by a 1064 nm nanosecond laser, according to some embodiments of the present invention;
FIG. 10 is a schematic of a selective laser patterning tool, according to some embodiments of the present invention;
FIG. 11 is a schematic illustration of a thin film deposition cluster tool for TFB fabrication, according to some embodiments of the present invention;
FIG. 12 is a representation of a thin film deposition system with multiple in-line tools for TFB fabrication, according to some embodiments of the present invention; and
FIG. 13 is a representation of an in-line deposition tool for TFB fabrication, according to some embodiments of the present invention.

### DETAILED DESCRIPTION

Embodiments of the present invention will now be described in detail with reference to the drawings, which are provided as illustrative examples of the invention so as to enable those skilled in the art to practice the invention. The drawings provided herein are merely representations of devices and device process flows and are not drawn to scale. Notably, the figures and examples below are not meant to limit the scope of the present invention to a single embodiment, but other embodiments are possible by way of interchange of some or all of the described or illustrated elements. Moreover, where certain elements of the present invention can be partially or fully implemented using known components, only those portions of such known components that are necessary for an understanding of the present invention will be described, and detailed descriptions of other portions of such known components will be omitted so as not to obscure the invention. In the present specification, an embodiment showing a singular component should not be considered limiting; rather, the invention is intended to encompass other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present invention encompasses present and future known equivalents to the known components referred to herein by way of illustration.

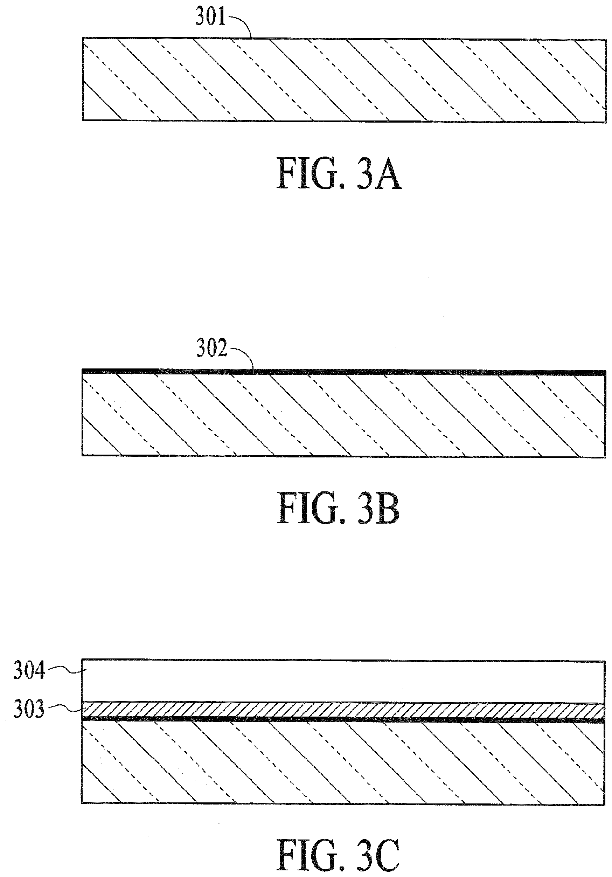

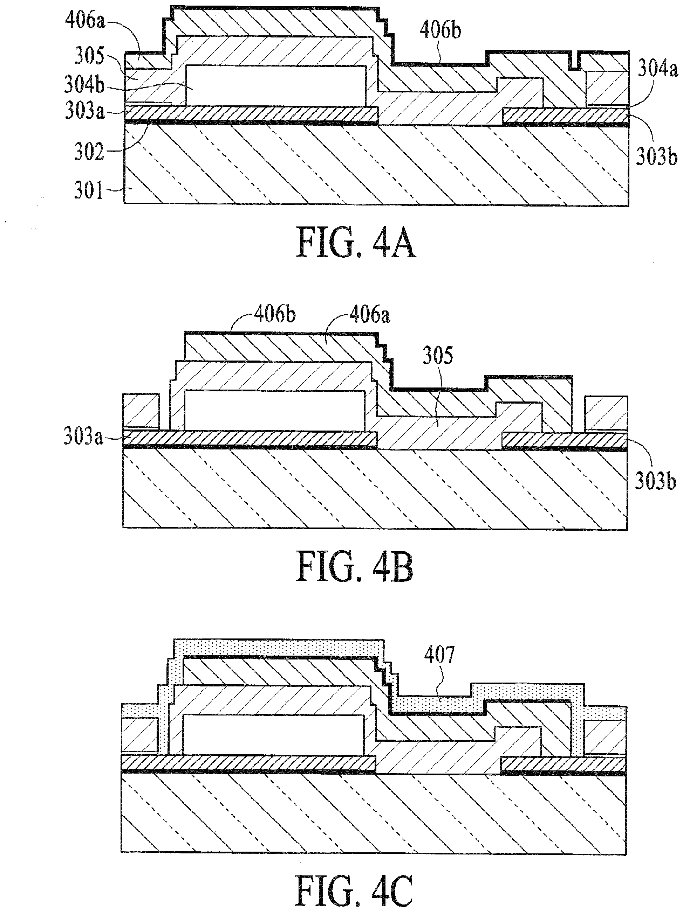

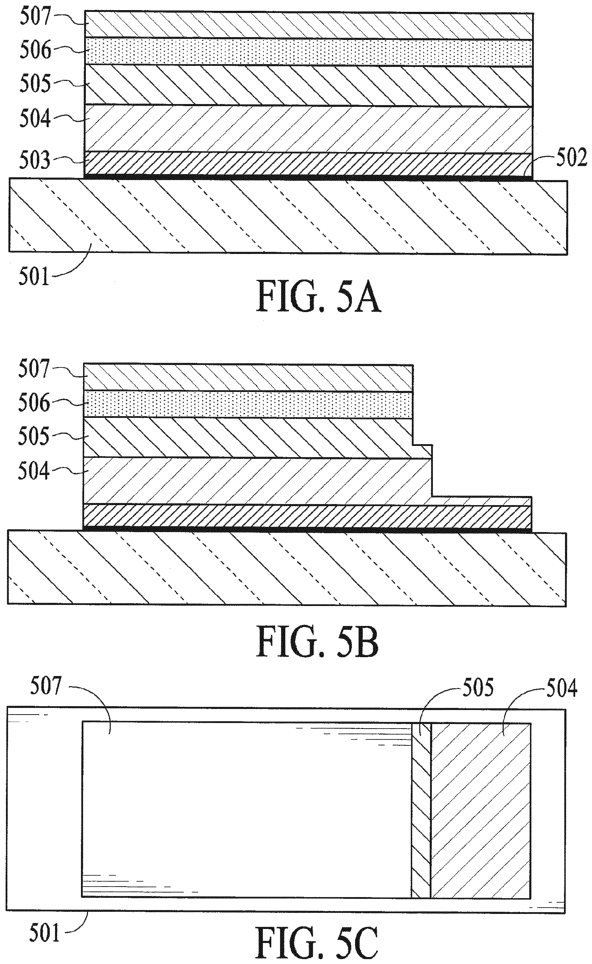

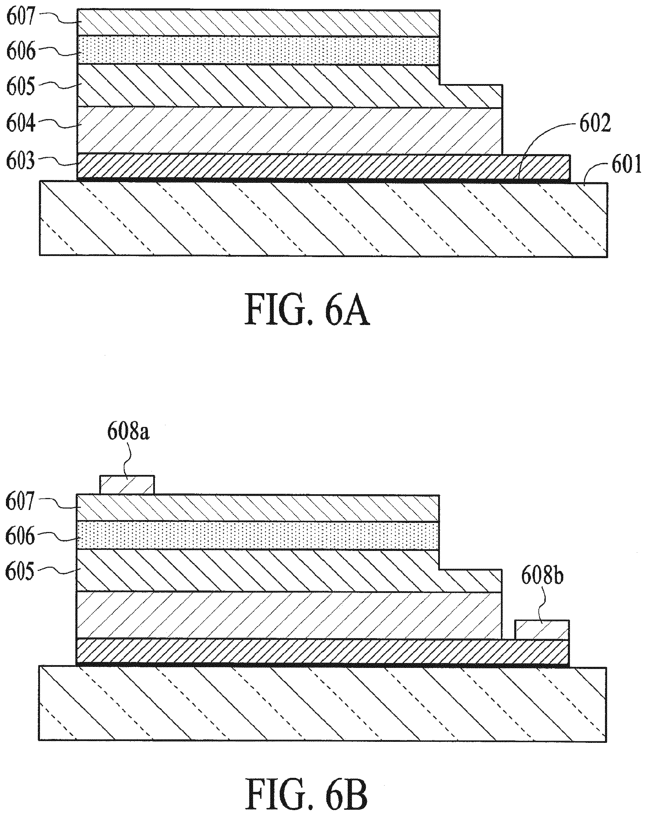

In conventional TFB manufacturing all layers are patterned using in-situ shadow masks which are fixed to the device substrate by backside magnets or Kapton® tape. In the present invention, instead of in-situ patterned depositions, blanket depositions without any shadow mask are proposed for all layers in the TFB fabrication process (see FIGS. 4A-4K & 5A-5C), all layers except the anode (see FIGS. 3A-3P), all layers except the contact pads (see FIGS. 6A-6C), or certain layers such as current collector, cathode and electrolyte. The flow may also incorporate processes for bonding, encapsulation and/or protective coating. Patterning of the blanket layers is by a selective laser ablation process, where the laser patterning process removes a layer or stack of layers while leaving layer(s) below intact. For example, the present invention may include: blanket deposition of a current collector (e.g. Ti/Au) on the substrate and selective laser patterning (selective between the current collector and the substrate); blanket deposition of a cathode (e.g. LiCoO2) on the patterned current collector and selective laser patterning (selective between the cathode and the current collector (e.g. Ti/Au)); and blanket deposition of an electrolyte (e.g. LiPON) on the patterned cathode and selective laser patterning (selective between the electrolyte and the patterned current collector (e.g. Ti/Au)). To reduce laser damage to the remaining areas of the current collectors some or all of the following may be utilized: the thin cathode layer may be intentionally left in the bonding pad regions of the current collectors during the first ablation of the cathode layer; and current collector regions are opened step by step - in other words, each opened area of current collector is only directly exposed to the laser once. (The laser ablation is from the film side of the substrate. In the bonding pad regions of the current collectors, the laser fluence may be intentionally reduced to stop the laser beam from removing all of the cathode layer during the first ablation of the cathode layer. In which case, the laser energy does not damage the bonding pad regions of the current collectors during this ablation step. In additional, due to its very short optical absorption depth and therefore ablation depth for UV (ultraviolet) and VIS (visible) lasers, the LiCoO2 cathode is more difficult to completely remove than other materials, such as the electrolyte LiPON and dielectrics (SiN and SiO2). Therefore, the remaining LiCoO2 can prevent unintentional laser damage of the underlying layers during laser ablations of the electrolyte, anode, protecting layers, etc, when UV and VIS lasers are used for ablation processes.)

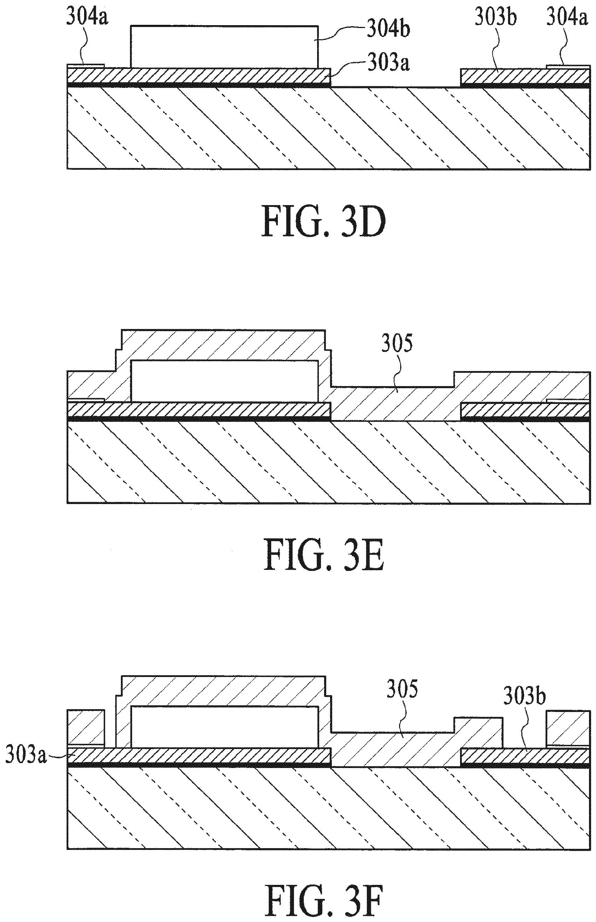

Furthermore, when die patterning is from the substrate side - the laser beam passes through the substrate before reaching the deposited layers - a die patterning assistance layer, e.g. an amorphous silicon (a-Si) layer or a microcrystalline silicon (µc-Si) layer, may be used to achieve thermal stress mismatch induced laser ablation, which greatly reduces the laser energy required to remove material and improves die patterning quality. The die patterning assistance layer has stronger thermal mismatch with the substrate and weaker bonding strength to the substrate, compared with the first layer of the TFB (generally Ti). When performing die patterning from the substrate side, the laser fluence can be as low as 0.1 J/cm² for the die patterning assistance layer to completely isolate the TFB cells. This level of laser fluence is not enough to melt materials - the materials are removed in solid state (called thermal stress mismatch induced ablation), which results in very clean ablation device edge profiles as well as unaffected surroundings. Whereas, without the die patterning assistance layer, higher laser fluence (greater than 1 J/cm²) is required to isolate the TFB cells. The die patterning layer may remain (in die patterning regions, not shown in figures) or be removed (as shown in FIG. 3D), depending on the laser process conditions.

The laser processing and ablation patterns may be designed to form TFBs with identical device structures to those fabricated using masks, although more accurate edge placement may provide higher device densities and other design improvements. Higher yield and device density for TFBs over current shadow mask manufacturing processes are expected for some embodiments of processes of the present invention since using shadow masks in TFB fabrication processes is a likely source of yield killing defects and removing the shadow masks may remove these defects. It is also expected that some embodiments of processes of the present invention will provide better patterning accuracy than for shadow mask processes, which will allow higher TFB device densities on a substrate. Further, some embodiments of the present invention are expected to relax constraints on PVD processes (restricted to lower power and temperature in shadow mask deposition processes) caused by potential thermal expansion induced alignment issues of the shadow masks, and increase deposition rates of TFB layers.

Furthermore, taking shadow masks out of the TFB manufacturing process may reduce new manufacturing process development costs by: eliminating mask aligner, mask management systems and mask cleaning; CoC (cost of consumables) reduction; and allowing use of industry proven processes - from the silicon integrated circuit and display industries. Blanket layer depositions and ex-situ laser pattering of TFB may improve pattern accuracy, yields and substrate/material usages sufficiently to drive down the TFB manufacturing costs - perhaps even a factor of 10 or more less than 2011 estimated costs.

Conventional laser scribe or laser projection technology may be used for the selective laser patterning processes of the present invention. The number of lasers may be: one, for example a UV/VIS laser with picosecond or femtosecond pulse width (selectivity controlled by laser fluence/dose); two, for example a combination of UV/VIS and IR lasers (selectivity controlled by laser wavelength/fluence/dose); or multiple (selectivity controlled by laser wavelength/fluence/dose). The scanning methods of a laser scribe system may be stage movement, beam movement by Galvanometers or both. The laser spot size of a laser scribe system may be adjusted from 100 microns (mainly for die pattering) to 1 cm in diameter. The laser area at the substrate for a laser projection system may be 5 mm² or larger. Furthermore, other laser types and configurations may be used.

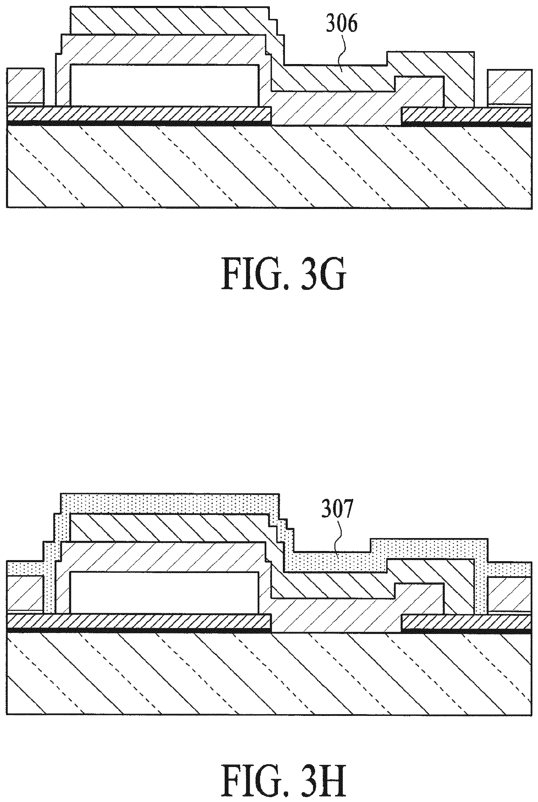

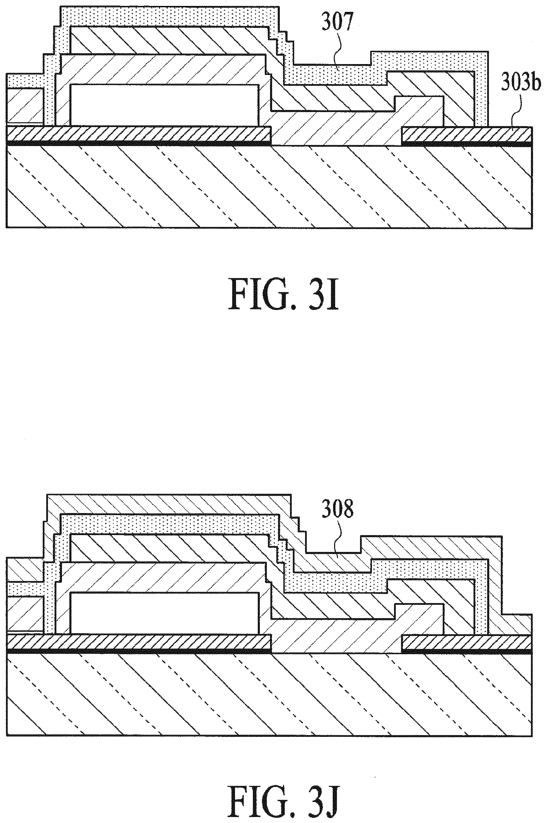

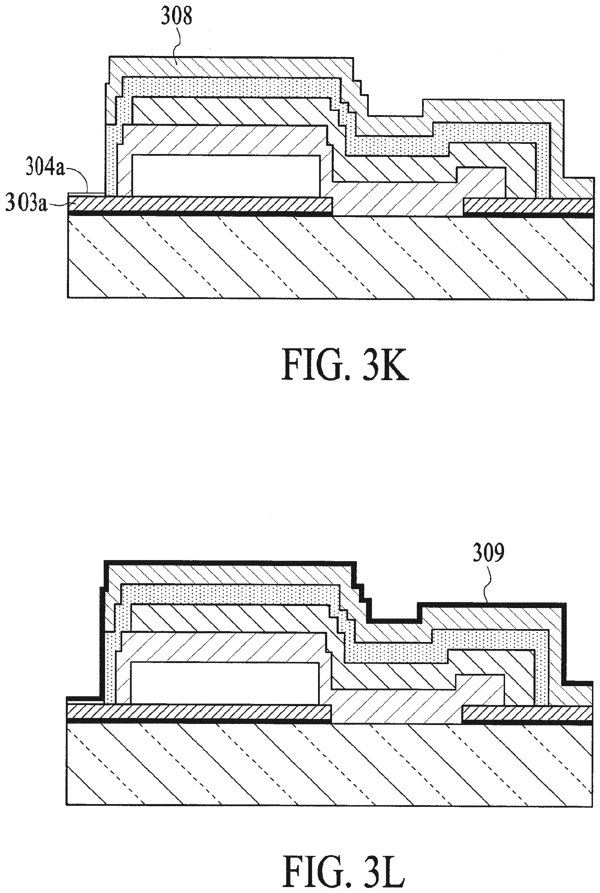

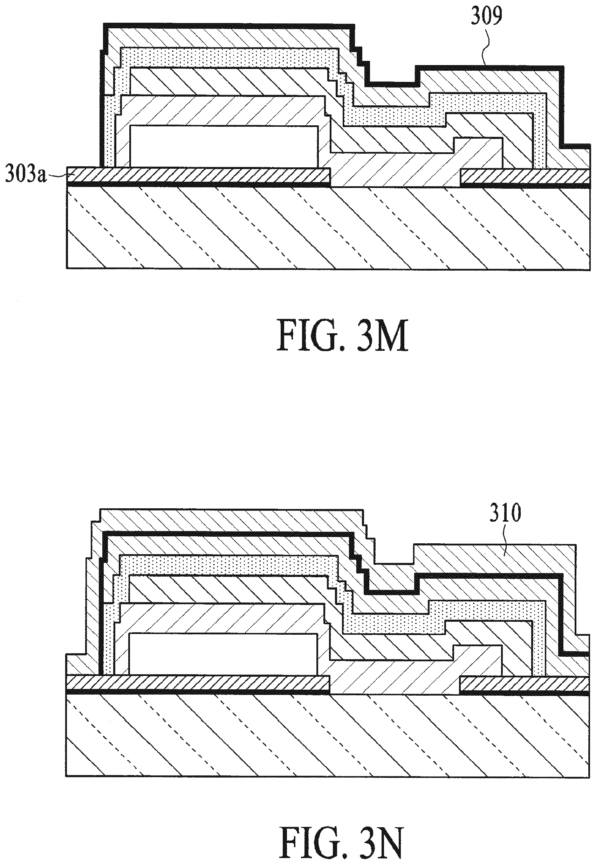

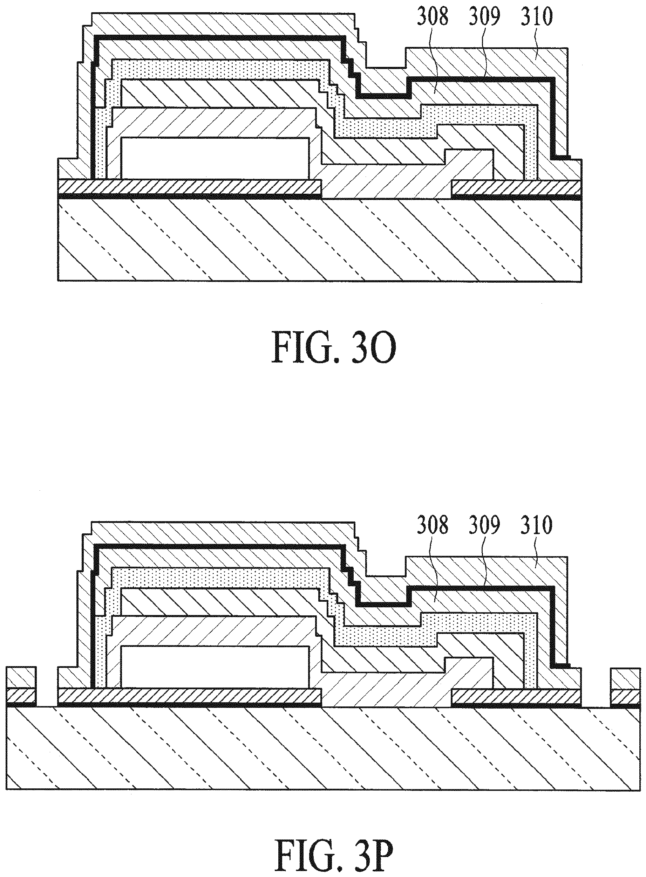

FIGS. 3A-3P illustrate the fabrication steps of a TFB according to some embodiments useful for the understanding of the present invention - this process flow includes all blanket depositions apart from one shadow mask step for the lithium layer. FIG. 3A shows substrate 301, which may be glass, silicon, mica, ceramic, metal, rigid material, flexible material, plastic / polymer, etc. which meets the transparency requirements given below. A blanket die patterning assistant layer 302, such as a layer of a-Si, µc-Si, or LiCoO₂, is deposited over the substrate 301 as shown in FIG. 3B. The layer 302 has high absorption while the substrate is transparent at a particular laser wavelength. For example, 301 may be glass and 302 may be a-Si - the glass is transparent to visible light, while a-Si has strong absorption. Blanket depositions of current collector layer 303 and cathode layer 304 are deposited over layer 302, as shown in FIG. 3C. Patterning of layers 302-304 are shown in FIG. 3D. The selective patterning is by laser ablation - laser ablation is achieved by controlling: the laser scan speed and fluence for a spot laser; or the number of shots and fluence for an area laser. The current collector layer 303 is patterned into a cathode current collector (CCC) 303a and an anode current collector (ACC) 303b. The cathode layer 304 is patterned into a thin cathode layer 304a in the current collector regions in order to protect the current collector from laser interaction/damage until the bonding pad processing, and a thick cathode 304a which functions as the TFB cathode. The cathode may be annealed at 600 °C or more for 2 hours or more in order to develop a crystalline structure. The annealing process may be done before or after laser patterning. Dry lithiation can take place here if needed, e. g. for non-Li anode cells. (For example, take a vanadium oxide cathode layer. If the counter electrode or anode is not Li, then the charge carrier will need to be added to the "system". This can be done using a so-called dry lithiation process. The process includes: depositing the cathode layer, and annealing if required; and depositing Li over the cathode. If a shadow-masked process is used for the cathode, then the same shadow mask can be used. The deposited lithium "reacts/intercalates" with the cathode layer, forming the lithiated cathode layer. The same general procedure can be followed for the anode side, if the anode side is another intercalation compound or composite/reaction based material, such as Sn and Si.) Blanket electrolyte 305 is blanket deposited, as shown in FIG. 3E. Laser ablation exposes small parts of current collectors 303, as shown in FIG. 3F. Patterned anode (e.g. Li) stack 306 is deposited using a shadow mask, and dry lithiation can take place here if needed - see FIG. 3G. Blanket encapsulation layer 307 (dielectric or polymer) is deposited as shown in FIG. 3H. Laser ablation exposes the ACC, as shown in FIG. 3I. Blanket bonding pad layer 308 is deposited as shown in FIG. 3J. Laser ablation exposes the CCC, as shown in FIG. 3K. Blanket dielectric 309 (SiN, for example) is deposited as shown in FIG. 3L. The CCC is further exposed by laser ablation, as shown in FIG. 3M. Blanket bonding pad 310 is deposited as shown in FIG. 3N. The contact pad (ACC) is exposed by laser ablation as shown in FIG. 3O. In FIG. 3O and 3P, the "sliver" of 309 remaining over the first bonding pad 308 is intentionally maintained to guard from shorting between lower 308 and upper 310 bonding pad layers during subsequent steps. Die patterning by laser ablation (1) from the front side without die patterning layer (2) from substrate side without die patterning layer or (3) from the substrate side with die a patterning layer is shown in FIG. 3P.

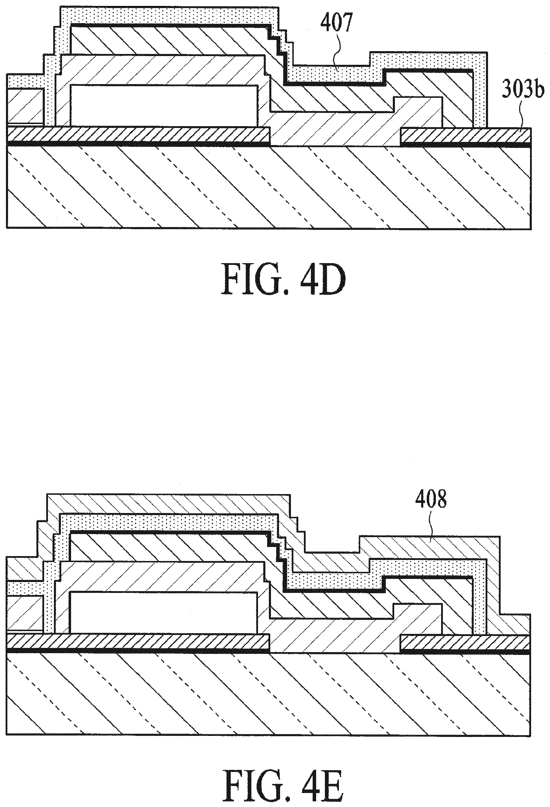

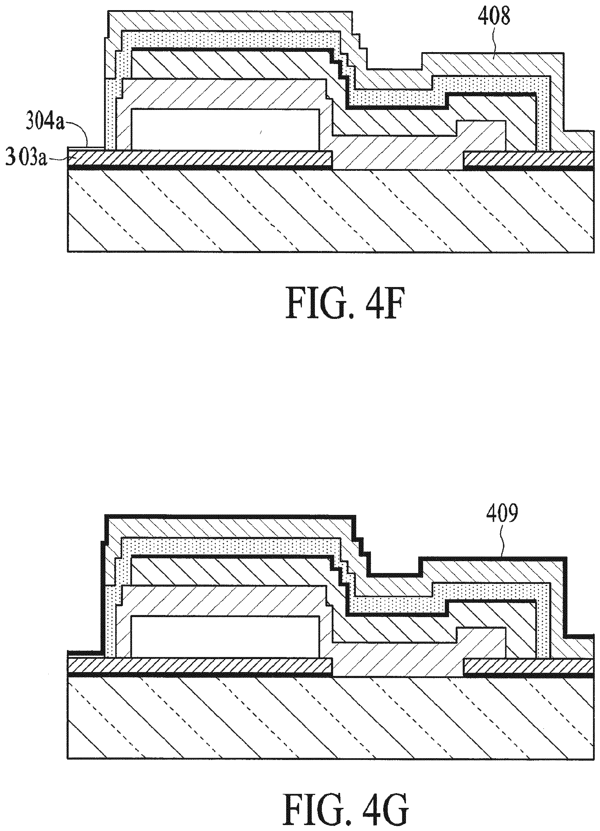

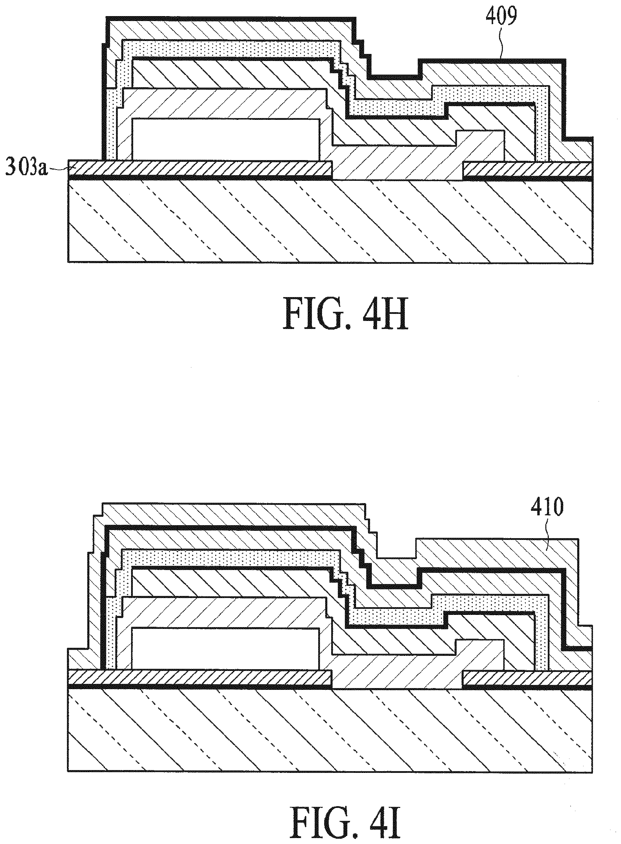

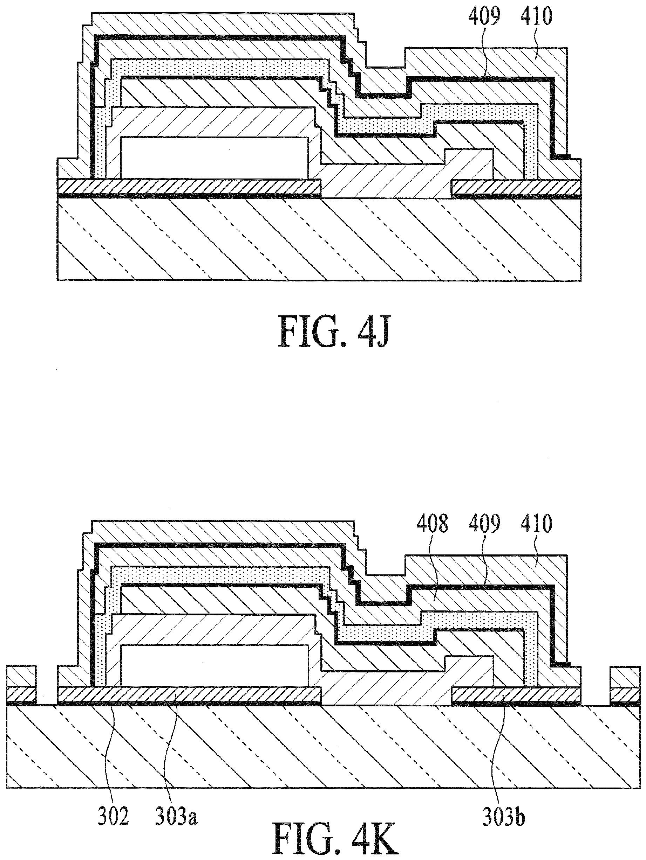

FIGS. 4A-4K illustrate the fabrication steps of a TFB according to some further embodiments useful for the understanding of the present invention - this process flow includes all blanket depositions of layers without the use of any shadow masks. FIG. 4A has already seen processing as described above for FIGS. 3A-3F, except the electrolyte layer is continuous over the CCC in FIG. 4A - this is done since the anode is blanket deposited in the embodiment of FIGS. 4A-K and thus only the ACC is exposed before anode deposition; this is followed by blanket deposition of anode 406a (e.g. Li) stack and thin protective layer 406b; dry lithiation can take place here if needed. As shown in FIG. 4B, laser patterning exposes partial ACC and CCC in an Ar/dry, or possibly air/wet, ambient. Blanket encapsulation layer 407 (dielectric or polymer) is deposited, as shown in FIG. 4C. Laser ablation exposes the ACC as shown in FIG. 4D. Blanket bonding pad 408 is deposited as shown in FIG. 4E. Laser ablation exposes the CCC as shown in FIG. 4F. Blanket dielectric 409, such as SiN, is deposited as shown in FIG. 4G. Laser ablation further exposes the CCC as shown in FIG. 4H. Blanket bonding pad 410 is deposited as shown in FIG. 4I. Laser ablation exposes bonding pad (ACC) as shown in FIG. 4J. In FIG 4J and 4K, the "sliver" of 409 remaining over the first bonding pad 408 is intentionally maintained to guard from shorting between lower 408 and upper 410 bonding pad layers during subsequent steps. Die patterning by laser ablation (1) from the front side without die patterning layer, (2) from the substrate side without die patterning layer, or (3) from the substrate side with die patterning layer, is shown in FIG. 4K.

The bonding pad layer 308/408 may also function to protect the polymer layers 307/407. This extra layer of protection is useful since the properties of the polymer layers slowly change with time, becoming permeable to air. Thus, unless there is an extra layer of protection, eventually the Li in the anode reacts with air through the polymer, which results in the loss of Li.

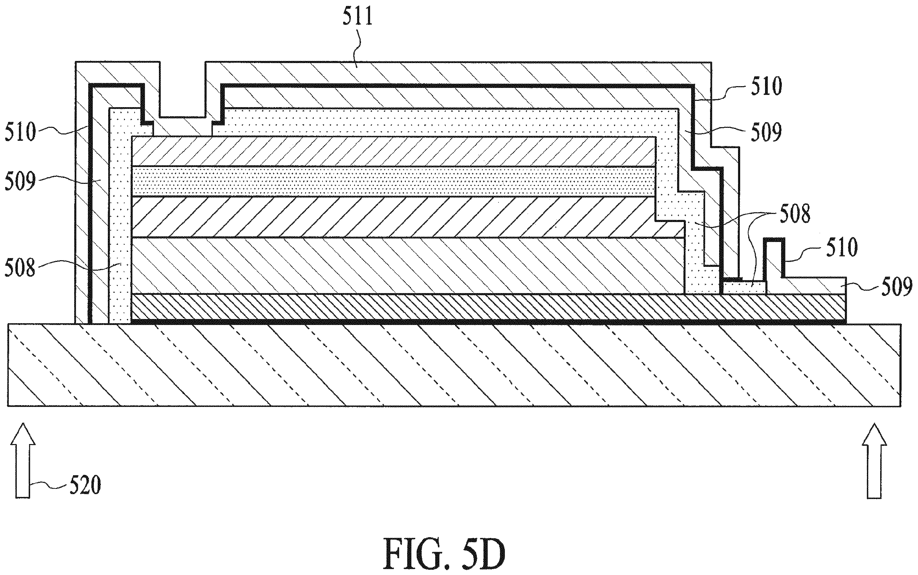

FIGS. 5A-5D illustrate the fabrication steps of a TFB according to some embodiments of the present invention - this process flow includes blanket depositions of all layers without a shadow mask, and furthermore, includes blanket depositions of all layers ACC through CCC in a stack prior to any laser patterning and conceivably without breaking vacuum. FIG. 5A shows substrate 501, which may be glass, silicon, mica, ceramic, metal, rigid material, flexible material, plastic / polymer, etc. which meets the transparency requirements given below. A blanket die patterning assistant layer 502, such as a layer of a-Si, µc-Si, or LiCoO₂, is deposited over the substrate 501. Blanket depositions of current collector layer 503 (e.g. Ti/Au) and cathode layer 504 (e.g. LiCoO2) are deposited over layer 502. Electrolyte layer 505 (e.g. LiPON) is blanket deposited over layer 504. Anode layer 506 (e.g. Li, Si) is blanket deposited over layer 505. ACC layer 507 (e.g. Ti/Au) is blanket deposited over layer 506. Cathode anneal to improve crystallinity can be done at this point in the process. Also, dry lithiation can be done if needed at this point in the process - for example, when fabricating non-Li anode cells. Die patterning is done using a laser - which can be from the front side without a die patterning assistant layer, from the substrate side without a die patterning assistant layer, or from the substrate side with a die patterning assistant layer. Using a die patterning assistant layer has the advantage of reducing the melting of the CCC which reduces shorting. Die patterning completes the structure of FIG. 5A. The structure of FIG. 5B is formed by selective laser ablation, controlling scan speeds (for spot laser) or number of shots (for area laser) and fluence. The thin cathode layer is left in the CCC regions to reduce laser damage of the CCC - subsequent steps involve deposition and then ablation of material from the CCC regions and the thin cathode layer protects the underlying CCC from any further laser damage. The step in the electrolyte layer creates a lateral distance between the anode side and the cathode side and is used to reduce electrical shorting between the ACC and the CCC due to cathode material - having an edge step in the electrolyte layer will keep the "edge mound" that may form by laser ablation of the cathode from creating a side wall short. FIG. 5C shows a plan view representation of the device of FIG. 5B - this structure is not drawn to scale. Note that generally the CCC region (covered by a thin layer of cathode material 504, which is removed by ablation in a later step, as described below) is much smaller than shown in order to maximize the device capacity. To form the structure of FIG. 5D, the following steps may be used. Blanket encapsulation layer(s) 508 (dielectric or polymer) is/are deposited. Laser ablation exposes the CCC contact region and a small amount of substrate adjacent to the stack to allow the next blanket deposition to completely cover the encapsulation layer over the stack - the latter helps to prevent lateral diffusion of Li, water and/or oxygen to/from the stack. Note that the encapsulation layer is intentionally left over most of the substrate to assist in the forthcoming die patterning steps. Blanket bonding pad layer 509 (Al, for example) is deposited over the stack. Laser ablation of the bonding pad layer opens up the ACC contact layer, apart from a thin layer of the encapsulation layer is left to protect the ACC and CCC during the next deposition step. A small amount of substrate and CCC adjacent to the stack is exposed to allow the next blanket deposition to completely cover the stack to assist in preventing lateral diffusion to/from the stack. Blanket dielectric 510 (SiN, for example) is deposited. The ACC contact region is exposed and a small amount of substrate adjacent to the stack is exposed to allow the next blanket deposition to completely cover the stack to assist in preventing lateral diffusion to/from the stack. Blanket bonding pad 511 (Al, for example) is deposited over the stack. Note that the dielectric layer prevents the shorting of the ACC and CCC. The CCC contact pad is exposed by laser ablation. Die patterning by laser ablation may be from the front side or from the substrate side. Laser patterning from the substrate side is shown in FIG. 5D using lasers 520.

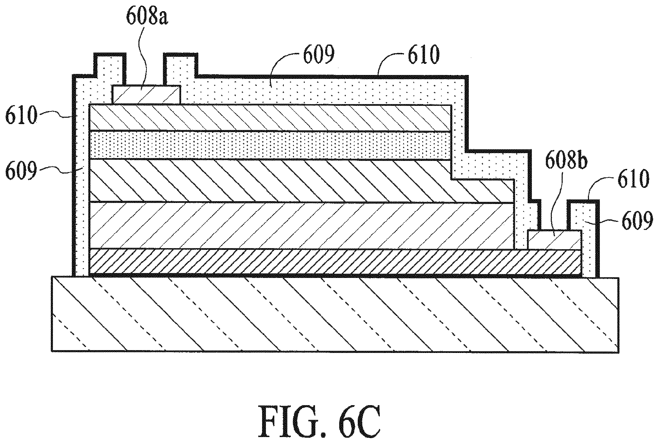

FIGS. 6A-6C illustrate the fabrication steps of a TFB according to some further embodiments of the present invention - this process flow includes blanket depositions of all layers without a shadow mask except for bonding pads, and furthermore, includes blanket depositions of all layers ACC through CCC in a stack prior to any laser patterning and conceivably without breaking vacuum. The process flow starts with fabricating a stack as shown in FIG. 5A. Specifically, there is a substrate 601, which may be glass, silicon, mica, ceramic, metal, rigid material, flexible material, plastic / polymer, etc. which meets the transparency requirements given below. A blanket die patterning assistant layer 602, such as a layer of a-Si, µc-Si, or LiCoO₂, is deposited over the substrate 601. Blanket depositions of current collector layer 603 (e.g. Ti/Au) and cathode layer 604 (e.g. LiCoO2) are deposited over layer 602. Electrolyte layer 605 (e.g. LiPON) is blanket deposited over layer 604. Anode layer 606 (e.g. Li, Si) is blanket deposited over layer 605. ACC layer 607 (e.g. Ti/Au) is blanket deposited over layer 606. Cathode anneal to improve crystallinity can be done at this point in the process. Also, dry lithiation can be done if needed at this point in the process - for example, when fabricating non-Li anode cells. Die patterning is done using a laser - which can be from the frontside without a die patterning assistant layer, from the substrate side without a die patterning assistant layer, or from the substrate side with a die patterning assistant layer. Using a die patterning assistant layer has the advantage of reducing the melting of the CCC which reduces shorting. The structure of FIG. 6A is formed by selective laser ablation, controlling scan speeds (for spot laser) or number of shots (for area laser) and fluence. A CCC area is opened up for a bonding pad, and a step is formed in the electrolyte layer. (Note that the structure of FIG. 6A is the same as that of FIG. 5B without the residual cathode layer covering the CCC region.) The step in the electrolyte layer creates a lateral distance between the anode side and the cathode side and is used to reduce electrical shorting between the ACC and the CCC due to cathode material - having an edge step in the electrolyte layer will keep the "edge mound" that may form by laser ablation of the cathode from creating a side wall short. FIG. 6B shows patterned bonding pad deposition (Al, for example) 608a and 608b for ACC and CCC, respectively, where mask deposition is used to reduce the PVD and laser steps. The following steps may be used to form the structure of FIG. 6C. Blanket encapsulation layer 609 (polymer or SiN, for example) deposition(s), followed by laser ablations of the encapsulation layer to expose the ACC and CCC bonding pads, and also die patterning. Multiple lasers may be used for the patterning. Blanket dielectric layer 610 (e.g. SiN) deposition, followed by laser ablation of the dielectric layer to expose the ACC and CCC bonding pads. Note that more dielectric or polymer layers may need to be deposited, and laser patterned, to achieve full protection of the Li anode.

The metal current collectors, both on the cathode and anode side, may need to function as protective barriers to the shuttling lithium ions. In addition, the anode current collector may need to function as a barrier to the oxidants (H2O, O₂, N₂, etc.) from the ambient. Therefore, the material or materials of choice should have minimal reaction or miscibility in contact with lithium in "both directions" - i.e., the Li moving into the metallic current collector to form a solid solution and vice versa. In addition, the material choice for the metallic current collector should have low reactivity and diffusivity to those oxidants. Based on published binary phase diagrams, some potential candidates for the first requirements are Ag, Al, Au, Ca, Cu, Co, Sn, Pd, Zn and Pt. With some materials, the thermal budget may need to be managed to ensure there is no reaction/diffusion between the metallic layers. If a single metal element is incapable of meeting both requirements, then alloys may be considered. Also, if a single layer is incapable of meeting both requirements, then dual (multiple) layers may be used. Furthermore, in addition an adhesion layer may be used in combination with a layer of one of the aforementioned refractory and non-oxidizing layers - for example, a Ti adhesion layer in combination with Au. The current collectors may be deposited by (pulsed) DC sputtering of metal targets (approximately 300 nm) to form the layers (e.g., metals such as Cu, Ag, Pd, Pt and Au, metal alloys, metalloids or carbon black). Furthermore, there are other options for forming the protective barriers to the shuttling lithium ions, such as dielectric layers, etc..

RF sputtering has been the traditional method for depositing the cathode layer (e.g., LiCoO2) and electrolyte layer (e.g., Li₃PO₄ in N₂), which are both insulators (more so for the electrolyte). However, pulsed DC has also been used for LiCoO2 deposition. Furthermore, other deposition techniques may be used.

The Li layer 306/406a/506/606 can be formed using an evaporation or sputtering process. The Li layer will generally be a Li alloy, where the Li is alloyed with a metal such as tin or a semiconductor such as silicon, for example. The Li layer can be about 3 µm thick (as appropriate for the cathode and capacity balancing) and the encapsulation layer 307/407 can be 3 µm or thicker. The encapsulation layer can be a multilayer of parylene and metal and/or dielectric. Note that, between the formation of the Li layer 306 and the encapsulation layer 307, the part must be kept in an inert environment, such as argon gas; however, after blanket encapsulation layer deposition the requirement for an inert environment will be relaxed. However, the layer 406b may be used to protect the Li layer so that the laser ablation process may be done out of vacuum, in which case, the requirement for an inert environment may be relaxed in the all blanket deposition process scheme. The ACC 507/607 may be used to protect the Li layer allowing laser ablation outside of vacuum and the requirement for an inert environment may be relaxed.

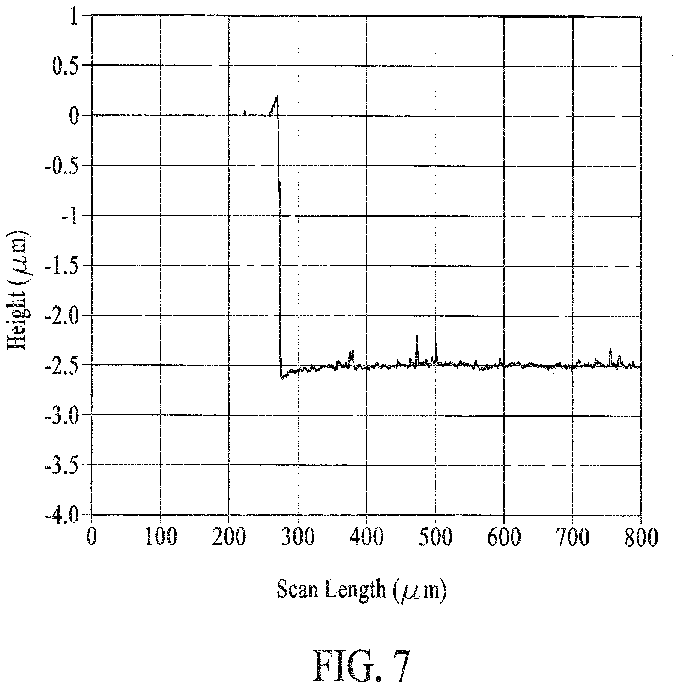

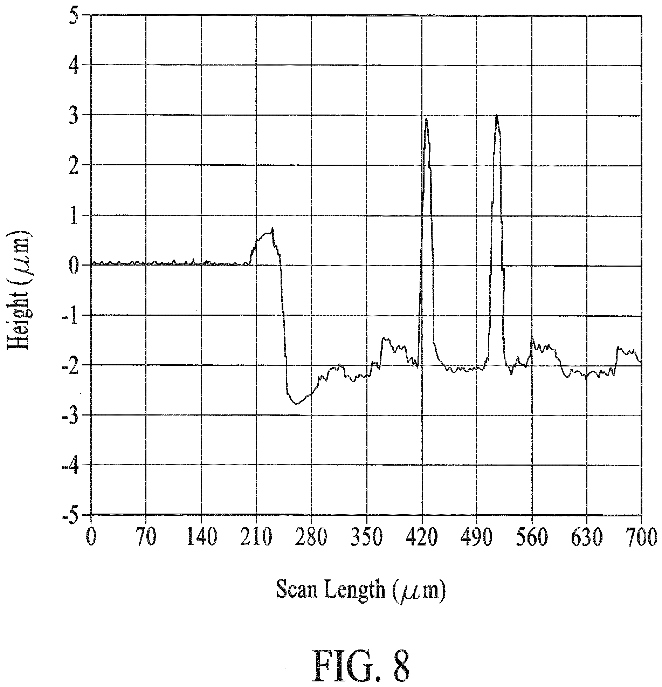

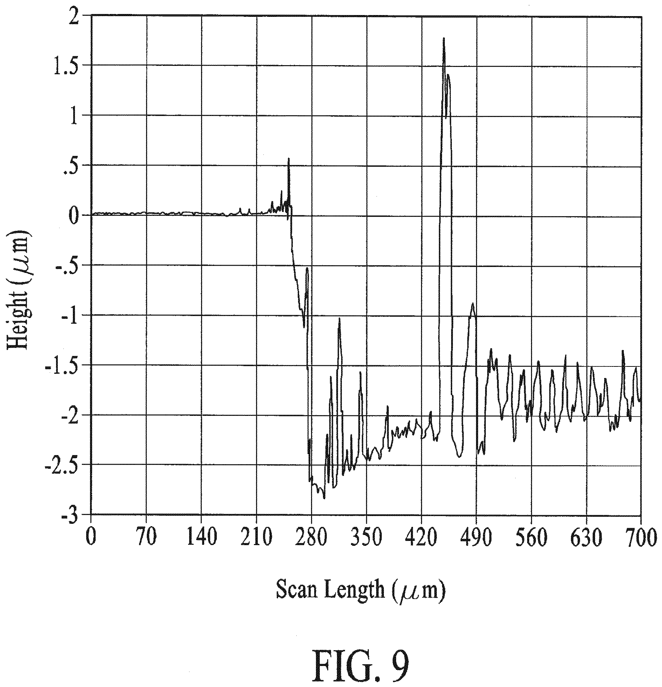

FIGS. 7, 8 & 9 show profilometer traces across the edge of a laser patterned layer. The film stacks in these specific examples are Ti/Au/LiCoO2 with thicknesses of 100/500/2000 nm on a glass substrate, and all were deposited by DC, pulsed magnetron. The lasers used for ablation were 532 nm and 1064 nm nanosecond lasers, with spot sizes around 30 microns. In FIG. 7 the die patterning is from the substrate side by a 532 nm, nanosecond pulse laser. Whereas FIGS. 8 & 9 are die patterning from the film side by 532 and 1064 nm nanosecond pulse lasers, respectively. There are very few "spikes" in the ablation region if die patterning is from the substrate side, whereas there are many large "spikes" in the ablation region if die patterning is from the device side. Laser patterning from the substrate side is an explosion process prior to melting of "upper" layers, whereas pattering from the film side needs to ablate the full film stack. The required laser fluence from the substrate side is much less than from the film side, especially for multiple thick film stacks. In addition, laser pattering from the film side has to first melt and then vaporize all film stacks and melt expulsion forms the "spikes" left in the ablation region. For die patterning from the substrate side, where the laser beam passes through the substrate before reaching deposited layers, experimental data demonstrates a large process window. For example, a 532 nm ns laser with 30 kHz PRF (pulse repetition frequency) shows excellent edge definition with no significant residue in the removal area, just as illustrated in FIG. 7, for the following range of diode current (corresponding to a fluence of 40 to 2000 mJ/cm²) and scanning speed:

| | 1 | 2 | 3 | 4 | 5 | 6 |
|---|---|---|---|---|---|---|
| Current in Amperes | 30 | 30 | 30 | 24 | 26 | 28 |
| Speed in mm/s | 400 | 700 | 1000 | 400 | 400 | 400 |

Furthermore, the process conditions may be varied from those described above. In particular, it is expected that the process window when laser pattering from the substrate side is very large. The benefits of laser patterning from the substrate side may also be seen when using area laser ablation systems.

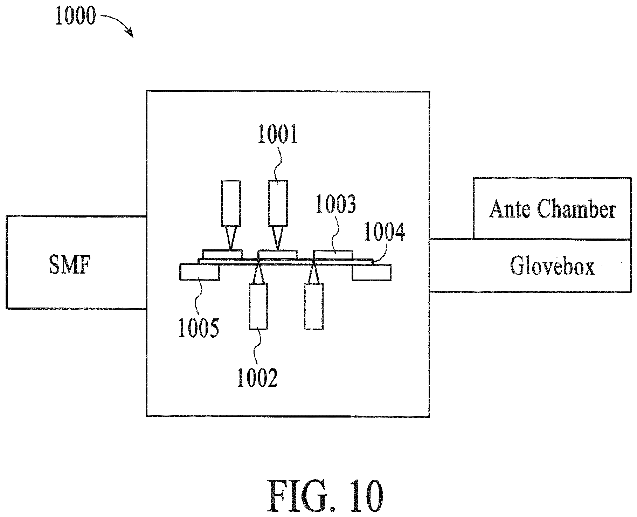

Figure 10 is a schematic of a selective laser patterning tool 1000, according to embodiments of the present invention. Tool 1000 includes lasers 1001 for patterning devices 1003 on a substrate 1004. Furthermore, lasers 1002 for patterning through the substrate 1004 are also shown, although lasers 1001 may be used for patterning through the substrate 1004 if the substrate is turned over. A substrate holder/stage 1005 is provided for holding and/or moving the substrate 1004. The stage 1005 may have apertures to accommodate laser patterning through the substrate. Tool 1000 may be configured for substrates to be stationary during laser ablation, or moving - the lasers 1001/1002 may also be fixed or movable; in some embodiments both the substrate and the lasers may be movable in which case the movement is coordinated by a control system. A stand-alone version of tool 1000 is shown in FIG. 10, including an SMF and also a glovebox and antechamber. The embodiment shown in FIG. 10 is one example of a tool according to the present invention - many other configurations of the tool are envisaged, for example, the glove box may not be necessary in the case of lithium-free TFBs. Furthermore, the tool 1000 may be located in a room with a suitable ambient, like a dry-room as used in lithium foil manufacturing.

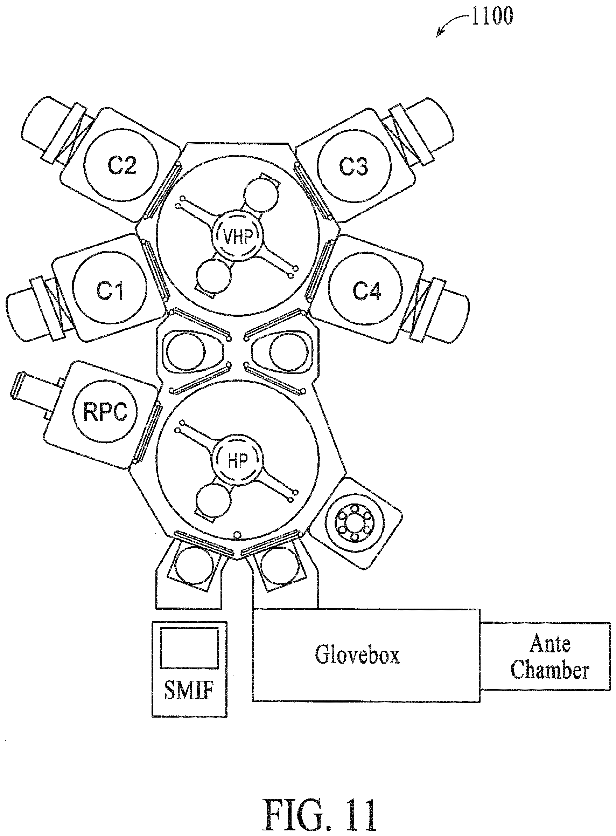

Figure 11 is a schematic illustration of a processing system 800 for fabricating a TFB device according to some embodiments of the present invention. The processing system 800 includes a standard mechanical interface (SMIF) to a cluster tool equipped with a reactive plasma clean (RPC) chamber and process chambers C1-C4, which may be utilized in the process steps described above. A glovebox may also be attached to the cluster tool if needed. The glovebox can store substrates in an inert environment (for example, under a noble gas such as He, Ne or Ar), which is useful after alkali metal/alkaline earth metal deposition. An ante chamber to the glovebox may also be used if needed - the ante chamber is a gas exchange chamber (inert gas to air and vice versa) which allows substrates to be transferred in and out of the glovebox without contaminating the inert environment in the glovebox. (Note that a glovebox can be replaced with a dry room ambient of sufficiently low dew point as such is used by lithium foil manufacturers.) The chambers C1-C4 can be configured for process steps for manufacturing thin film battery devices which may include: deposition of a cathode layer (e.g. LiCoO2 by RF sputtering); deposition of an electrolyte layer (e.g. Li₃PO₄ by RF sputtering in N₂); deposition of an alkali metal or alkaline earth metal; and selective laser patterning of blanket layers. Examples of suitable cluster tool platforms include AKT's display cluster tools, such as the Generation 10 display cluster tools or Applied Material's Endura™ and Centura™ for smaller substrates. It is to be understood that while a cluster arrangement has been shown for the processing system 1100, a linear system may be utilized in which the processing chambers are arranged in a line without a transfer chamber so that the substrate continuously moves from one chamber to the next chamber.

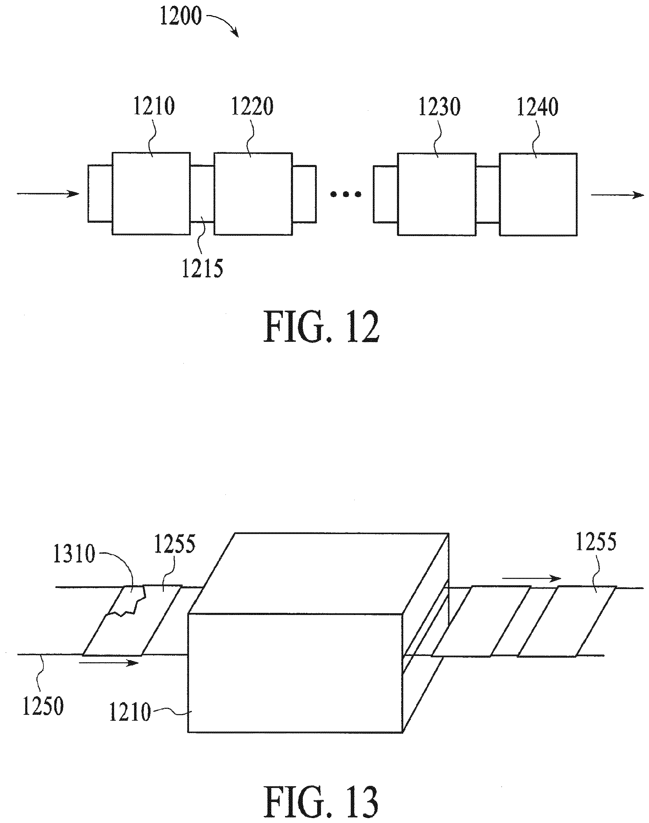

Figure 12 shows a representation of an in-line fabrication system 1200 with multiple in-line tools 1210, 1220, 1230, 1240, etc., according to some embodiments of the present invention. In-line tools may include tools for depositing and patterning all the layers of a TFB device. Furthermore, the in-line tools may include pre- and post-conditioning chambers. For example, tool 1210 may be a pump down chamber for establishing a vacuum prior to the substrate moving through a vacuum airlock 1215 into a deposition tool 1220. Some or all of the in-line tools may be vacuum tools separated by vacuum airlocks 1215. Note that the order of process tools and specific process tools in the process line will be determined by the particular TFB device fabrication method being used - four specific examples of which are provided above. Furthermore, substrates may be moved through the in-line fabrication system oriented either horizontally or vertically. Yet furthermore, selective laser patterning modules may be configured for substrates to be stationary during laser ablation, or moving.

In order to illustrate the movement of a substrate through an in-line fabrication system such as shown in Fig. 12, in Figure 13 a substrate conveyer 1250 is shown with only one in-line tool 1210 in place. A substrate holder 1255 containing a substrate 1310 (the substrate holder is shown partially cut-away so that the substrate can be seen) is mounted on the conveyer 1250, or equivalent device, for moving the holder and substrate through the in-line tool 1210, as indicated. Suitable in-line platforms for processing tool 1210 may be Applied Material's Aton™ and New Aristo™.

A first apparatus for forming thin film batteries according to embodiments useful for the understanding of the present invention may comprise: a first system for blanket depositing on a substrate and serially selectively laser patterning a current collector layer, a cathode layer and an electrolyte layer to form a first stack; a second system for forming a lithium anode on the first stack to form a second stack; a third system for blanket depositing and selectively laser patterning a bonding pad layer on the second stack; and a fourth system for laser die patterning said third stack. The systems may be cluster tools, in-line tools, stand-alone tools, or a combination of one or more of the aforesaid tools. Furthermore, the systems may include some tools which are common to one or more of the other systems.

A second apparatus for forming thin film batteries according to embodiments useful for the understanding of the present invention may comprise: a first system for depositing a first stack of blanket layers on a substrate, the stack comprising a cathode current collector layer, a cathode layer, an electrolyte layer, an anode layer and an anode current collector layer; a second system for laser die patterning the first stack to form a second stack; and a third system for laser patterning the second stack to form a device stack, the laser patterning revealing a cathode current collector area and a portion of the electrolyte layer adjacent to the cathode current collector area, wherein the laser patterning of the device stack includes removing a part of the thickness of the portion of the electrolyte layer to form a step in the electrolyte layer. The second system and the third system may be the same system. Furthermore, the apparatus may include a fourth system for depositing and patterning encapsulation and bonding pad layers. The systems may be cluster tools, in-line tools, stand-alone tools, or a combination of one or more of the aforesaid tools. Furthermore, the fourth system may include some tools which are the same as tools in one or more of the first, second and third systems.

Although the present invention has been described herein with reference to TFBs, the teaching and principles of the present invention may also be applied to improved methods for fabricating other electrochemical devices, including electrochromic devices.

Although the present invention has been particularly described with reference to certain embodiments thereof, it should be readily apparent to those of ordinary skill in the art that changes and modifications in the form and details may be made without departing from the scope of the invention.

According to an embodiment useful for the understanding, a method of fabricating a thin film battery includes:
depositing a first stack of blanket layers on a substrate, said stack including a cathode current collector layer, a cathode layer, an electrolyte layer, an anode layer and an anode current collector layer;
laser die patterning said first stack to form a second stack;
laser patterning said second stack to form a device stack, said laser patterning revealing a cathode current collector area and a portion of said electrolyte layer adjacent to said cathode current collector area, wherein said laser patterning of said second stack includes removing a part of the thickness of said portion of said electrolyte layer to form a step in said electrolyte layer; and
depositing on said device stack and patterning encapsulation and bonding pad layers.

According to an embodiment useful for the understanding, said depositing said first stack of blanket layers is completed without breaking vacuum.

According to an embodiment useful for the understanding, the method further includes depositing a blanket die patterning assistance layer on said substrate before said depositing said first stack of blanket layers, said first stack of blanket layers being deposited on said die patterning assistance layer, wherein said substrate is transparent to laser light and wherein said die patterning assistance layer includes a layer of material for achieving thermal stress mismatch between said die patterning assistance layer and said substrate.

According to an embodiment useful for the understanding, said laser die patterning includes laser irradiation through said substrate of a portion of said die patterning assistance layer and thermal stress mismatch induced ablation of a corresponding portion of said first stack.

According to an embodiment useful for the understanding, said laser patterning said second stack includes leaving a portion of the thickness of said cathode layer over the surface of said cathode current collector area.

According to an embodiment useful for the understanding, said bonding pad layer is deposited using a mask.

According to an embodiment useful for the understanding, said bonding pad layer and said encapsulation layer are blanket deposited on said device stack and laser patterned.

According to an embodiment useful for the understanding, said bonding pad layer is patterned to completely cover said encapsulation layer for providing further protection from the environment of active layers of said thin film battery.

According to an embodiment useful for the understanding, an apparatus for forming thin film batteries includes:
a first system for depositing a first stack of blanket layers on a substrate, said stack including a cathode current collector layer, a cathode layer, an electrolyte layer, an anode layer and an anode current collector layer;
a second system for laser die patterning said first stack to form a second stack; and
a third system for laser patterning said second stack to form a device stack, said laser patterning revealing a cathode current collector area and a portion of said electrolyte layer adjacent to said cathode current collector area, wherein said laser patterning said second stack includes removing a part of the thickness of said portion of said electrolyte layer to form a step in said electrolyte layer.

According to an embodiment useful for the understanding, said second system and said third system are the same.

According to an embodiment useful for the understanding, the apparatus further includes a fourth system for depositing on said device stack and patterning encapsulation and bonding pad layers.

According to an embodiment useful for the understanding, said first system further deposits a blanket die patterning assistance layer on said substrate before said depositing said first stack of blanket layers, said first stack of blanket layers being deposited on said die patterning assistance layer, wherein said substrate is transparent to laser light and wherein said die patterning assistance layer includes a layer of material for achieving thermal stress mismatch between said die patterning assistance layer and said substrate, and wherein said second system includes lasers configured to irradiate, through said substrate, a portion of said die patterning assistance layer to induce thermal stress mismatch ablation of a corresponding portion of said first stack.

According to an embodiment useful for the understanding, said laser patterning said second stack includes leaving a portion of the thickness of said cathode layer over the surface of said cathode current collector area.

According to an embodiment useful for the understanding, a method of fabricating a thin film battery includes:
blanket depositing on a substrate and serially selectively laser patterning a current collector layer, a cathode layer and an electrolyte layer to form a first stack;
forming a lithium anode on said first stack to form a second stack;
blanket depositing and selectively laser patterning a bonding pad layer on said second stack to form a third stack; and
laser die patterning said third stack.

According to an embodiment, said forming said lithium anode includes blanket depositing on said first stack and selectively laser patterning a lithium anode layer.

According to an embodiment useful for the understanding, said forming said lithium anode includes depositing lithium on said first stack using a mask.

According to an embodiment useful for the understanding, the method further includes depositing a blanket die patterning assistance layer on said substrate before said blanket depositing on a substrate and serially selectively laser patterning said current collector layer, said cathode layer and said electrolyte layer, said first stack of blanket layers being deposited on said die patterning assistance layer, wherein said substrate is transparent to laser light and wherein said die patterning assistance layer includes a layer of material for achieving thermal stress mismatch between said die patterning assistance layer and said substrate.

According to an embodiment useful for the understanding, said laser die patterning includes laser irradiation through said substrate of a portion of said die patterning assistance layer and thermal stress mismatch induced ablation of a corresponding portion of said first stack.

According to an embodiment useful for the understanding, an apparatus for forming thin film batteries includes:
a first system for blanket depositing on a substrate and serially selectively laser patterning a current collector layer, a cathode layer and an electrolyte layer to form a first stack;
a second system for forming a lithium anode on said first stack to form a second stack;
a third system for blanket depositing and selectively laser patterning a bonding pad layer on said second stack; and
a fourth system for laser die patterning said second stack.

According to an embodiment useful for the understanding, said first system further deposits a blanket die patterning assistance layer on said substrate before said blanket depositing on a substrate and serially selectively laser patterning said current collector layer, said cathode layer and said electrolyte layer, said first stack of blanket layers being deposited on said die patterning assistance layer, wherein said substrate is transparent to laser light and wherein said die patterning assistance layer includes a layer of material for achieving thermal stress mismatch between said die patterning assistance layer and said substrate, and wherein said second system includes lasers configured to irradiate, through said substrate, a portion of said die patterning assistance layer to induce thermal stress mismatch ablation of a corresponding portion of said first stack.

## Claims

1. A thin film battery, comprising:
a stack of layers on a substrate (501, 601), said stack comprising a cathode current collector layer (503, 603), a cathode layer (504, 604), an electrolyte layer (505, 605), an anode layer (506, 606) and an anode current collector layer (507, 607),
wherein said stack is formed by laser die pattering a stack of blanket layers,
wherein said stack is further laser patterned to reveal a cathode current collector area and a portion of said electrolyte layer adjacent to said cathode current collector area, and wherein a part of the thickness of said portion of said electrolyte layer is laser removed to form a step in said electrolyte layer; and
an encapsulation layer over said stack of layers.

2. The thin film battery of claim 1, wherein said substrate comprises glass.

3. The thin film battery of claim 1, wherein said cathode layer comprises LiCoO₂.

4. The thin film battery of claim 1, wherein said electrolyte layer comprises LiPON.

5. The thin film battery of claim 1, wherein said anode layer comprises lithium metal.

6. The thin film battery of claim 1, wherein said encapsulation layer comprises a polymer.

7. The thin film battery of claim 1, further comprising a die patterning assistance layer on said substrate between the substrate and said patterned stack of layers, said stack of layers being deposited on said die patterning assistance layer, wherein said substrate is transparent to laser light and wherein said die patterning assistance layer includes a layer of material for achieving thermal stress mismatch between said die patterning assistance layer and said substrate.

8. The thin film battery of claim 7, wherein said die patterning assistance layer comprises a material selected from the group consisting of amorphous silicon, microcrystalline silicon and LiCoO₂.

9. The thin film battery of claim 1, further comprising a bonding pad layer (509) covering said encapsulation layer and said cathode current collector area.

10. The thin film battery of claim 9, wherein said bonding pad layer comprises aluminum.

11. The thin film battery of claim 9, further comprising a dielectric layer (610) covering said stack, said dielectric layer being deposited over said bonding pad layer.

12. The thin film battery of claim 11, wherein said dielectric layer comprises silicon nitride.

13. The thin film battery of claim 11, further comprising a bonding pad covering said stack, said bonding pad being deposited over said dielectric layer, said dielectric layer electrically isolating said bonding pad layer and said bonding pad, said bonding pad being electrically connected to said anode current collector layer through an aperture in said encapsulation layer and said dielectric layer.

14. The thin film battery of claim 13, wherein said bonding pad comprises aluminum.

## Patentansprüche

1. Dünnschichtbatterie, umfassend:
eine Stapelung aus Schichten auf einem Substrat (501, 601), wobei die Stapelung eine Kathodenstromkollektorschicht (503, 603), eine Kathodenschicht (504, 604), eine Elektrolytschicht (505, 605), eine Anodenschicht (506, 606) und eine Anodenstromkollektorschicht (507, 607) umfasst,
wobei die Stapelung durch Lasermatrizenstrukturieren einer Stapelung aus Deckschichten gebildet ist,
wobei die Stapelung ferner laserstrukturiert ist, um einen Kathodenstromkollektorbereich und einen an den Kathodenstromkollektorbereich angrenzenden Abschnitt der Elektrolytschicht freizulegen, und wobei ein Teil der Dicke des Abschnitts der Elektrolytschicht mittels Laser entfernt ist, um eine Stufe in der Elektrolytschicht zu bilden, und
eine Verkapselungsschicht über der Stapelung aus Schichten.

2. Dünnschichtbatterie nach Anspruch 1, wobei das Substrat Glas umfasst.

3. Dünnschichtbatterie nach Anspruch 1, wobei die Kathodenschicht LiCoO2 umfasst.

4. Dünnschichtbatterie nach Anspruch 1, wobei die Elektrolytschicht LiPON umfasst.

5. Dünnschichtbatterie nach Anspruch 1, wobei die Anodenschicht Lithiummetall umfasst.

6. Dünnschichtbatterie nach Anspruch 1, wobei die Verkapselungsschicht ein Polymer umfasst.

7. Dünnschichtbatterie nach Anspruch 1, ferner umfassend eine Matrizenstrukturierungshilfsschicht auf dem Substrat zwischen dem Substrat und der strukturierten Stapelung aus Schichten, wobei die Stapelung aus Schichten auf die Matrizenstrukturierungshilfsschicht abgeschieden ist, wobei das Substrat durchlässig für Laserlicht ist und wobei die Matrizenstrukturierungshilfsschicht eine Materialschicht aufweist, um zwischen der Matrizenstrukturierungshilfsschicht und dem Substrat eine Wärmebelastungsdiskrepanz zu erzielen.

8. Dünnschichtbatterie nach Anspruch 7, wobei die Matrizenstrukturierungshilfsschicht ein Material umfasst, das ausgewählt ist aus der Gruppe, bestehend aus amorphem Silicium, mikrokristallinem Silicium und LiCoO₂.

9. Dünnschichtbatterie nach Anspruch 1, ferner umfassend eine die Verkapselungsschicht und den Kathodenstromkollektorbereich bedeckende Kontaktfleckschicht (509).

10. Dünnschichtbatterie nach Anspruch 9, wobei die Kontaktfleckschicht Aluminium umfasst.

11. Dünnschichtbatterie nach Anspruch 9, ferner umfassend eine die Stapelung bedeckende dielektrische Schicht (610), wobei die dielektrische Schicht über die Kontaktfleckschicht abgeschieden ist.

12. Dünnschichtbatterie nach Anspruch 11, wobei die dielektrische Schicht Siliciumnitrid umfasst.

13. Dünnschichtbatterie nach Anspruch 11, ferner umfassend einen die Stapelung bedeckenden Kontaktfleck, wobei der Kontaktfleck über die dielektrische Schicht abgeschieden ist, wobei die dielektrische Schicht die Kontaktfleckschicht und den Kontaktfleck elektrisch isoliert, wobei der Kontaktfleck durch eine Öffnung in der Verkapselungsschicht und der dielektrischen Schicht elektrisch mit der Anodenstromkollektorschicht verbunden ist.

14. Dünnschichtbatterie nach Anspruch 13, wobei der Kontaktfleck Aluminium umfasst.

## Revendications

1. Batterie à film mince, comprenant :
une pile de couches sur un substrat (501, 601), ladite pile comprenant une couche collectrice de courant cathodique (503, 603), une couche de cathode (504, 604), une couche d'électrolyte (505, 605), une couche d'anode (506, 606) et une couche collectrice de courant anodique (507, 607),
dans laquelle ladite pile est formée par formation de motifs à matrice laser sur une pile de couches de couverture,
dans laquelle ladite pile est en outre soumise à la formation de motifs au laser pour révéler une zone collectrice de courant cathodique et une partie de ladite couche d'électrolyte adjacente à ladite zone collectrice de courant cathodique, et dans laquelle une partie de l'épaisseur de ladite partie de ladite couche d'électrolyte est éliminée au laser pour former un seuil dans ladite couche d'électrolyte ; et
une couche d'encapsulation sur ladite pile de couches.

2. Batterie à film mince selon la revendication 1, dans laquelle ledit substrat comprend du verre.

3. Batterie à film mince selon la revendication 1, dans laquelle ladite couche de cathode comprend du LiCoO₂.

4. Batterie à film mince selon la revendication 1, dans laquelle ladite couche d'électrolyte comprend du LiPON.

5. Batterie à film mince selon la revendication 1, dans laquelle ladite couche d'anode comprend du métal de lithium.

6. Batterie à film mince selon la revendication 1, dans laquelle ladite couche d'encapsulation comprend un polymère.

7. Batterie à film mince selon la revendication 1, comprenant en outre une couche auxiliaire de formation de matrice sur ledit substrat entre le substrat et ladite pile de couches à motifs, ladite pile de couches étant déposée sur ladite couche auxiliaire de formation de matrice, ledit substrat étant transparent à la lumière laser et ladite couche auxiliaire de formation de matrice comprenant une couche de matériau permettant d'obtenir un décalage de contrainte thermique entre ladite couche auxiliaire de formation de matrice et ledit substrat.

8. Batterie à film mince selon la revendication 7, dans laquelle ladite couche auxiliaire de formation de matrice comprend un matériau sélectionné parmi le groupe comprenant le silicium amorphe, le silicium microcristallin et le LiCoO₂.

9. Batterie à film mince selon la revendication 1, comprenant en outre une couche de plot de connexion (509) recouvrant ladite couche d'encapsulation et ladite couche collectrice de courant cathodique.

10. Batterie à film mince selon la revendication 9, dans laquelle ladite couche de plot de connexion comprend de l'aluminium.

11. Batterie à film mince selon la revendication 9, comprenant en outre une couche diélectrique (610) recouvrant ladite pile, ladite couche diélectrique étant déposée sur ladite couche de plot de connexion.

12. Batterie à film mince selon la revendication 11, dans laquelle la couche diélectrique comprend du nitrure de silicium.

13. Batterie à film mince selon la revendication 11, comprenant en outre un plot de connexion recouvrant ladite pile, ledit plot de connexion étant déposé sur ladite couche diélectrique, ladite couche diélectrique isolant électriquement ladite couche de plot de connexion et ledit plot de connexion, ledit plot de connexion étant électriquement relié à ladite couche collectrice de courant anodique à travers une ouverture dans ladite couche d'encapsulation et ladite couche diélectrique.

14. Batterie à film mince selon la revendication 13, dans laquelle ledit plot de connexion comprend de l'aluminium.
